# EUROPÄISCHE PATENTSCHRIFT

(11) **EP 1 572 812 B1**
(45) Veröffentlichungstag und Bekanntmachung des Hinweises auf die Patenterteilung: **15.05.2019**
(21) Anmeldenummer: 03767774.7
(22) Anmeldetag: 09.12.2003
(51) Int. Cl.: C09C 1/00, C09D 5/03, C09D 5/36, C09D 11/037

(54) **SILBERWEISSE INTERFERENZPIGMENTE MIT HOHEM GLANZ AUF DER BASIS VON TRANSPARENTEN SUBSTRATPLÄTTCHEN**
SILVERY WHITE INTERFERENCE PIGMENTS HAVING A HIGH LUSTER AND BASED ON TRANSPARENT SUBSTRATE LAMINAE
PIGMENTS D'INTERFERENCE BLANC ARGENTE A FORTE BRILLANCE A BASE DE SUBSTRATS SOUS FORME DE PAILLETTES TRANSPARENTES

(30) Priorität: 17.12.2002 DE 10259301; 22.01.2003 DE 10302589
(43) Veröffentlichungstag der Anmeldung: 14.09.2005
(73) Patentinhaber: Merck Patent GmbH, 64293 Darmstadt (DE)
(72) Erfinder: RÜGER, Reinhold, 63322 Rödermark (DE); AMBROSIUS, Klaus, 64807 Dieburg (DE); MATHIAS, Marcus, 64579 Gernsheim (DE); KNIESS, Helge, Bettina, 64331 Weiterstadt (DE)
(86) Internationale Anmeldenummer: PCT/EP2003/013943
(87) Internationale Veröffentlichungsnummer: WO 2004/055119

(56) Entgegenhaltungen:
- EP-A1- 0 940 451
- EP-A2- 0 708 154
- WO-A-01/30920
- WO-A-98/53011
- WO-A-03/006558

## Beschreibung

Die vorliegende Erfindung betrifft Interferenzpigmente auf der Basis von mehrfach beschichteten plättchenförmigen Substraten sowie deren Verwendung, u.a. in Farben, Lacken, Druckfarben, Kunststoffen und in kosmetischen Formulierungen.

Interferenzpigmente werden als Glanz- oder Effektpigmente in vielen Bereichen der Technik eingesetzt, insbesondere in der dekorativen Beschichtung, im Kunststoff, in Farben, Lacken, Druckfarben sowie in kosmetischen Formulierungen. Pigmente, die einen winkelabhängigen Farbwechsel zwischen mehreren Interferenzfarben zeigen, sind aufgrund ihres Farbenspiels von besonderem Interesse für Autolacke, fälschungssichere Wertschriften und in der dekorativen Kosmetik.

Interferenzpigmente, z.B. bekannt aus der EP 0 708 154 A2 oder EP 0 940 451 A1, bestehen in der Regel aus plättchenförmigen Trägern, die mit dünnen Metalloxidschichten belegt sind. Die optische Wirkung dieser Pigmente beruht auf der gerichteten Reflexion von Licht an den vorwiegend parallel ausgerichteten Plättchen. Dabei entstehen durch Reflexion des Lichtes and den Grenzflächen von Schichten mit unterschiedlichem Brechungsindex Interferenzfarben (G. Pfaff in High Performance Pigments, Wiley-VCH Verlag, Weinheim, 2002, Kap. 7, Special Effect Pigments).

In der U.S. 3,331,699 werden Perlglanzpigmente mit brillanten Interferenzfarben und intensivem Glitzereffekt beschrieben. Die Pigmente basieren auf Glasplättchen, die mit einer durchscheinenden hochbrechenden Metalloxidschicht beschichtet sind. Als Metalloxide kommen ZrO₂, TiO₂, Cr₂O₃ in Frage. Die Farbe der Pigmente ist dabei abhängig vom gewählten Metalloxid und von der Dicke der Metalloxidschicht. Viele Interferenzfarben von Silber über Gold, Violett, Blau und Grün lassen sich durch unterschiedliche Schichtdicken erzeugen. Die Glaszusammensetzung ist dabei unkritisch für die Beschichtung mit einem Metalloxid. Damit überhaupt eine Belegung erzielt wird, ist aber die Anwesenheit eines Keimbildners, wie z.B. Zinndioxid oder Boehmit, auf der Glasoberfläche zwingend erforderlich.

In der WO 97/46624 werden Perlglanzpigmente beschrieben, die auf Glasplättchen basieren und mit TiO₂ oder Fe₂O₃ beschichtet sind.

Glänzende Pigmente werden nur dann erhalten, wenn die dünne Metallschicht auf dem Träger sehr glatt und gleichmäßig ist. In der WO 97/46624 wird ausgeführt, dass die Beschichtung stark auf dem Träger haften muss, damit es bei der Verarbeitung nicht zu Bruch und/oder Ablösung der Beschichtung kommt. Vom Anwender wird eine nicht ausreichende Haftung der Metalloxidschicht auf dem Träger als mangelnde mechanische Stabilität des Pigmentes wahrgenommen, da bei mechanischer Belastung, z. B. durch Scherkräfte beim Verreiben des Pigmentes in einer kosmetischen Zubereitung auf der Haut, im Druckprozess, bei der Herstellung von Pigmentgranulaten oder beim Umpumpen in der Ringleitung einer Lackierstraße der Glanz stark abnimmt. Schon ein geringer Anteil von beschädigten Pigmentteilchen verursacht eine deutliche Verschlechterung der Koloristik der Pigmentanwendung.

Pigmente aus U.S. 3,331,699 und WO 97/46624 können aufgrund der verwendeten Glassorten nur bei Temperaturen unterhalb von 600 °C geglüht werden. Die Temperatur von 600 °C stellt hier aber keine scharfe Grenze dar, sondern ist ein Kompromiss aus schwer zu vereinbarenden anwendungstechnischen Anforderungen.

Bei niedriger Temperatur geglühte Pigmente mit TiO₂-Schichten zeigen erhöhte Photoaktivität, insbesondere bei der Einarbeitung in Kunststoffsystemen und sind für Artikel, die intensiver oder dauerhafter Lichteinwirkung ausgesetzt sind, nicht geeignet. Ursache hierfür sind die Porositäten und die großen aktiven Oberflächen der aufgefällten Metalloxidschichten, die erst bei Glühtemperaturen ab 700 °C verdichten. Diese Verdichtung führt zu einer verminderten Porosität der Metalloxidschichten und gleichzeitig zu einer Erhöhung der Brechungsindices und damit zu verbesserten optischen Eigenschaften der Pigmente. Bei höheren Temperaturen werden aber die Pigmente durch die starke Erweichung der Glaskerne und damit einhergehende Deformation der Plättchen sowie Bruch und/oder Ablösung der Beschichtung zerstört. Auch bei Glühtemperaturen von 600 °C und weniger kann es zu einer Verminderung der Schichthaftung auf dem Träger kommen, wodurch die mechanische Stabilität der Pigmente beeinträchtigt wird. Solche Pigmente sind in der Praxis nur bedingt einsetzbar.

Aus der EP 0 753 545 B1 sind goniochromatische Glanzpigmente auf der Basis hochbrechender transparenter, nichtmetallischer plättchenförmiger Substrate bekannt, die mindestens ein Schichtpaket aus einer farblosen Beschichtung mit einer Brechzahl von n ≤ 1,8 und einer reflektierenden, selektiv oder nichtselektiv absorbierenden Beschichtung enthalten. Geeignete Substrate, wie z.B. plättchenförmiges Eisenoxid, BiOCl, mit TiO₂ oder ZrO₂ beschichteter Glimmer, weisen einen Brechungsindex von n ≥ 2 auf. Die goniochromatischen Glanzpigmente zeigen einen winkelabhängigen Farbwechsel zwischen mehreren intensiven Interferenzfarben und damit einen ausgeprägten Farbflop, der in vielen technischen Anwendungen von Vorteil, in dekorativen Anwendungen häufig erwünscht ist, in der großen Masse der Anwendungen von Perlglanzpigmenten jedoch nicht gewünscht wird.

Aus der WO 01/30920 sind deckende gold- und orangefarbene Interferenzpigmente bekannt, die sich dadurch auszeichnen, dass plättchenförmige Substrate mit mindestens zwei Schichtfolgen aus einer niedrigbrechenden Schicht und einer hochbrechenden Schicht aus einem Metalloxidgemisch aus Fe₂O₃ und TiO₂ belegt sind. Als Materialien für die niedrigbrechende Beschichtung werden SiO₂, Al₂O₃, AlO(OH), B₂O₃, MgF₂, MgSiO₃ oder Gemische dieser Oxide genannt. Wesentliche Merkmale bei den Pigmenten aus der WO 01/30920 sind jedoch die Körperfarbe und das Deckvermögen durch die hohe Eigenabsorption der Mischoxidschichten. Damit sind nur deckende gold- und orangefarbene Pigmente zugänglich. Silberweiße Pigmente mit hohem Glanz sind ebenso wenig zugänglich wie hochglänzende Pigmente mit brillanten Interferenzfarben und hoher Transparenz. Besonders an silberweißen Pigmenten mit verbessertem Glanz besteht ein großer Bedarf seitens der Drucktechnik, in Kunststoffen, für Lacke und in der Kosmetik.

Aufgabe der vorliegenden Erfindung ist es, silberweiße Interferenzpigmente mit hohem Glanz sowie hochglänzende Interferenzpigmente mit brillanten Interferenzfarben zur Verfügung zu stellen, die mechanisch stabil und einfach herstellbar sind und sich durch weitere vorteilhafte Anwendungseigenschaften auszeichnen.

Überraschenderweise wurde nun gefunden, dass Interferenzpigmente auf der Basis von transparenten plättchenförmigen Substraten einen verbesserten Glanz, und intensivere Farben zeigen, wenn die Plättchen mit einer ersten Schicht aus SiO₂ belegt werden, auf die dann eine hochbrechende Schicht, wie z.B. Titandioxid, Titansuboxid, Zirkonoxid, Zinnoxid, Chromoxid, Fe₂O₃ oder Fe₃O₄, aufgebracht wird.

Erfindungsgemäße Pigmente mit Glasplättchen als Träger zeichnen sich gegenüber den beschichteten Glasplättchen aus dem Stand der Technik zusätzlich zu ihrem höheren Glanz noch durch ein deutlich verbessertes Glühverhalten aus. Die erfindungsgemäßen Interferenzpigmente auf Basis von Glasplättchen können bei Temperaturen > 700 °C geglüht werden, ohne dass es zu Deformationen oder zur Zerstörung der Plättchenstruktur kommt.

Die erfindungsgemäßen Interferenzpigmente sind dadurch den Pigmenten aus dem Stand der Technik nicht nur hinsichtlich ihrer optischen Eigenschaften, wie Glanz und Farbstärke, sondern auch in ihren anwendungstechnischen Eigenschaften, wie z. B. der mechanischen Stabilität und der Photostabilität, deutlich überlegen.

Gegenstand der Erfindung sind gemäß Anspruch 1 daher Interferenzpigmente auf der Basis von plättchenförmigen Substraten, die sich dadurch auszeichnen, dass sie
(A) eine Schicht aus SiO₂ mit einer Schichtdicke von 5-350 nm,
(B) eine hochbrechende Beschichtung mit einem Brechungsindex n > 1,8
   und/oder
(C) ein Interferenzsystem bestehend aus alternierenden hoch- und niedrigbrechenden Schichten
   und optional
(D) eine äußere Schutzschicht
   enthalten.

Gegenstand der Erfindung ist weiterhin die Verwendung der erfindungsgemäßen Interferenzpigmente in Farben, Lacken, insbesondere Automobillacken, Pulverlacken, Druckfarben, Sicherheitsdruckfarben, Kunststoffen, keramischen Materialien, Gläsern, Papier, in Tonern für elektrophotographische Druckverfahren, im Saatgut, in Gewächshausfolien und Zeltplanen, als Absorber bei der Lasermarkierung von Papier und Kunststoffen, in kosmetischen Formulierungen. Weiterhin sind die erfindungsgemäßen Pigmente auch zur Herstellung von Pigmentanteigungen mit Wasser, organischen und/oder wässrigen Lösemitteln, Pigmentpräparationen sowie zur Herstellung von Trockenpräparaten, wie z. B. Granulaten, Chips, Pellets, Briketts, etc., geeignet. Die Trockenpräparate sind insbesondere für Druckfarben und in der Kosmetik geeignet.

Geeignete Basissubstrate für die erfindungsgemäßen Interferenzpigmente sind Glasplättchen, Glimmerplättchen und Al₂O₃-Plättchen.

Insbesondere bevorzugt sind Glasplättchen aufgrund ihrer besonders glatten Oberfläche und ihres sehr hohen Reflexionsvermögens.

Die Größe der Basissubstrate ist an sich nicht kritisch und kann auf den jeweiligen Anwendungszweck abgestimmt werden. In der Regel haben die plättchenförmigen Substrate eine Dicke zwischen 0,005 und 10 µm, insbesondere zwischen 0,1 und 5 µm. Die Ausdehnung in den beiden anderen Bereichen beträgt üblicherweise 1-500 µm, vorzugsweise 2-300 µm und insbesondere 20-200 µm. Bevorzugte kleinere Partikelgrößen sind weiterhin solche im Bereich von 1-100 µm, insbesondere 5-60 µm und 1-15 µm.

Besonders bevorzugt sind Glasplättchen mit einer durchschnittlichen Dicke von < 2 µm. Dickere Plättchen können in den gängigen Druckverfahren und bei anspruchsvollen Lackierungen in der Regel nicht eingesetzt werden. Vorzugsweise besitzen die Glasplättchen Dicken von < 1 µm, insbesondere von < 0,9 µm, ganz besonders bevorzugt von < 0,7 µm. Insbesondere bevorzugt sind Glasplättchen mit Dicken von 0,25-0,7 µm. Der Durchmesser der Glasplättchen liegt vorzugsweise bei 5-300 µm, insbesondere bevorzugt bei 10-100 µm, ferner bei 5-60 µm. Glasplättchen mit diesen Dimensionen können z. B. nach dem in der EP 0 289 240 beschriebenen Verfahren hergestellt werden.

Die Glasplättchen können aus allen dem Fachmann bekannten Glastypen bestehen, wie z.B. Fensterglas, C-Glas, E-Glas, ECR-Glas, Duran®-Glas, Laborgeräteglas oder optisches Glas. Insbesondere bevorzugt ist E-Glas oder ECR-Glas. Der Brechungsindex der Glasplättchen liegt vorzugsweise bei 1,45-1,80, insbesondere bei 1,50-1,70.

Die chemische Zusammensetzung der Glasplättchen ist aufgrund der Belegung mit einer SiO₂-Schicht (Schicht (A)) allerdings von untergeordneter Bedeutung für die weiteren Beschichtungen und die resultierenden anwendungstechnischen Eigenschaften der Pigmente. Durch die SiO₂-Belegung wird die Glasoberfläche vor chemischer Veränderung wie Quellung, Auslaugen von Glasbestandteilen oder Auflösung in den aggressiven sauren Belegungslösungen geschützt.

Während des Glühprozesses kommt es im Fall der Glasplättchen an der Grenzfläche zwischen Glaskörper und aufgefälltem SiO₂ zu einem innigen Verbund der chemisch verwandten Materialien. Aufgrund der hohen Erweichungstemperatur gibt die aufgefällte SiO₂-Hülle den Substraten auch beim Glühen oberhalb von 700 °C die erforderliche mechanische Stabilität. Auch die Haftung der auf die SiO₂-Schichten folgenden hochbrechenden Beschichtung(en) ist sehr gut, auch oberhalb 700 °C.

Die Dicke der Schicht (A) auf dem Substrat kann in Abhängigkeit vom gewünschten Effekt in weiten Bereichen variiert werden. Die Schicht (A) weist Dicken von 5-350 nm, vorzugsweise von 5-150 nm, auf. Für die Steuerung von Glanz und Farbstärke sind Schichtdicken von 30-100 nm bevorzugt.

Die SiO₂-Schicht kann auch mit Rußpartikeln, anorganischen Farbpigmenten, und/oder Metallpartikeln dotiert sein, sofern diese Dotierung an Luft oder unter Inertgas bei Temperaturen > 700 °C stabil ist. Der Anteil an Dotiermittel in der SiO₂-Matrix beträgt dann 1-30 Gew.%, vorzugsweise 2-20 Gew.%, insbesondere 5-20 Gew.%.

Die hochbrechende Beschichtung (B) besteht vorzugsweise aus Metalloxiden und/oder Suboxiden.

Vorzugsweise besteht die Schicht (B) aus Metalloxiden, wie z. B. TiO₂, ZrO₂, SnO₂, ZnO, Ce₂O₃, Fe₂O₃, Fe₃O₄, Cr₂O₃, CoO, Co₃O₄, VO₂, V₂O₃, NiO, ferner aus Titansuboxiden (TiO₂ teilweise reduziert mit Oxidationszahlen von < 4 bis 2 wie die niederen Oxide Ti₃O₅, Ti₂O₃ bis zu TiO), Titanoxynitriden, FeO(OH), dünnen semitransparenten Metallschichten, z. B. aus Al, Fe, Cr, Ag, Au, Pt, Pd bzw. Kombinationen davon. Die TiO₂-Schicht kann in der Rutil- oder in der Anatasmodifikation vorliegen, vorzugsweise handelt es sich um Rutilschichten. Die Herstellung von Rutil erfolgt vorzugsweise nach dem Verfahren aus der EP 0 271 767.

Vorzugsweise handelt es sich bei der Schicht (B) um eine Metalloxidschicht, insbesondere um TiO₂, Fe₂O₃, Fe₃O₄, SnO₂, ZrO₂ oder Cr₂O₃. Insbesondere bevorzugt ist Titandioxid.

Die Schicht (B) kann selbstverständlich auch aus mehreren hochbrechenden Schichten bestehen. Vorzugsweise besteht die Schicht (B) aus nur einer Schicht, ferner aus zwei Schichten.

Die Dicke der hochbrechenden Schichten richtet sich nach der gewünschten Interferenzfarbe. Vorzugsweise beträgt die Dicke der Schicht (B) 60-300 nm. Durch die Kombination der dünnen SiO₂-Schicht mit einer hochbrechenden Metalloxidschicht lassen sich beispielsweise Interferenzfarben von reinem Silberweiß über Gold bis zu einem intensiven Grün erhalten.

Auf die Schicht (B) können alternierend weitere hoch- und/oder niedrigbrechende Schichten (Schicht C) aufgebracht werden. Die Anzahl der Schichten beträgt vorzugsweise zwei, ferner drei, vier, fünf, sechs oder sieben Schichten.

Insbesondere Interferenzpakete bestehend aus hoch- und niedrigbrechenden Schichten auf der Schicht (B) führen zu Pigmenten mit gesteigertem Glanz und einer nochmals gesteigerten Interferenzfarbe.

Anstelle der Schicht (B) kann auch direkt auf die SiO₂-Schicht ein Interferenzsystem aus alternierenden hoch- und niedrigbrechenden Schichten aufgebracht werden (Schicht C).

Die Dicke der einzelnen Schichten mit hohem bzw. niedrigem Brechungsindex ist dabei wiederum wesentlich für die optischen Eigenschaften des Pigments. Für das erfindungsgemäße Interferenzpigment müssen die Dicken der einzelnen Schichten genau aufeinander eingestellt werden. Die Dicke der Schicht (C) beträgt 40-800 nm, vorzugsweise 60-600 nm, insbesondere 100-400 nm.

Als hochbrechende Schicht kommen alle Materialien in Frage, die bei der Schicht (B) aufgeführt worden sind.

Als farblose niedrigbrechende Materialien für die Beschichtung (C) sind vorzugsweise Metalloxide bzw. die entsprechenden Oxidhydrate, wie z.B. SiO₂, Al₂O₃, AlO(OH), B₂O₃, Verbindungen wie MgF₂, MgSiO₃ oder ein Gemisch der genannten Metalloxide, geeignet. Bei dem Interferenzsystem der Schicht (C) handelt es sich insbesondere um eine Schichtenfolge aus TiO₂-SiO₂-TiO₂.

Weiterhin können die erfindungsgemäßen Interferenzpigmente auch eine semitransparente Metallschicht als äußere Schicht aufweisen. Derartige Beschichtungen sind z.B. aus der DE 38 25 702 A1 bekannt. Bei den Metallschichten handelt es sich vorzugsweise um Chrom- oder Aluminiumschichten mit Schichtdicken von 5-25 nm.

Selbstverständlich können als hochbrechende Schichten (B) und/oder (C) auch farblose hochbrechende Materialien, wie z. B. Metalloxide, insbesondere TiO₂ und ZrO₂, verwendet werden, die mit Temperatur-stabilen absorbierenden Farbmitteln, wie z. B. rotes Eisenoxid, Thenards Blau, eingefärbt sind. Die absorbierenden Farbmittel können auch auf die hochbrechende Beschichtung als Film aufgebracht werden. Berliner Blau und Karminrot werden vorzugsweise auf die bereits kalzinierten TiO₂- und ZrO₂-Schichten aufgebracht. Beispiele für derartige Beschichtungen sind z. B. bekannt aus der DE 23 13 332.

Besonders bevorzugte Interferenzpigmente werden nachfolgend genannt:
Glasplättchen + SiO₂ + TiO₂
Glasplättchen + SiO₂ + Fe₂O₃
Glasplättchen + SiO₂ + Fe₃O₄
Glasplättchen + SiO₂ + Cr₂O₃
Glasplättchen + SiO₂ + TiO₂ + Berliner Blau
Glasplättchen + SiO₂ + TiO₂ + Karminrot
Glasplättchen + SiO₂ + TiO₂ + SiO₂ + TiO₂
Glasplättchen + SiO₂ + TiO₂ + Cr
Glimmerplättchen + SiO₂ + TiO₂
Glimmerplättchen + SiO₂ + Fe₂O₃
Glimmerplättchen + SiO₂ + Fe₃O₄
Glimmerplättchen + SiO₂ + Cr₂O₃
Glimmerplättchen + SiO₂ + TiO₂ + Berliner Blau
Glimmerplättchen + SiO₂ + TiO₂ + Karminrot
Glimmerplättchen + SiO₂ + TiO₂ + SiO₂ + TiO₂
Glimmerplättchen + SiO₂ + TiO₂ + Cr
Al₂O₃-Plättchen + SiO₂ + TiO₂
Al₂O₃-Plättchen + SiO₂ + Fe₂O₃
Al₂O₃-Plättchen + SiO₂ + Fe₃O₄
Al₂O₃-Plättchen + SiO₂ + Cr₂O₃
Al₂O₃-Plättchen + SiO₂ + TiO₂ + Berliner Blau
Al₂O₃-Plättchen + SiO₂ + TiO₂ + Karminrot
Al₂O₃-Plättchen + SiO₂ + SnO₂ + TiO₂ + Karminrot
Al₂O₃-Plättchen + SiO₂ + TiO₂ + SiO₂ + TiO₂
Al₂O₃-Plättchen + SiO₂ + TiO₂ + Cr

Unter den besonders bevorzugten Interferenzpigmenten sind die beschichteten Glasplättchen insbesondere bevorzugt, ferner die beschichteten Al₂O₃-Plättchen.

Unter hochbrechenden Beschichtungen sind Schichten mit einem Brechungsindex von > 1,8, unter niedrigbrechenden Schichten solche mit n ≤ 1,8 zu verstehen.

Die erfindungsgemäßen Interferenzpigmente lassen sich in der Regel relativ leicht herstellen.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z.B. beschrieben in DE 14 67 468, DE 19 59 988, DE 20 09 566, DE 22 14 545, DE 22 15 191, DE 22 44, 298, DE 23 13 331, DE 15 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit ein oder mehreren hydrolysierbaren Metallsalzen oder einer Wasserglaslösung bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und bei 50-150 °C für 6-18 h getrocknet und gegebenenfalls 0,5-3 h geglüht, wobei die Glühtemperatur im Hinblick auf die jeweils vorliegende Beschichtung optimiert werden kann. In der Regel liegen die Glühtemperaturen zwischen 700 und 1000 °C, vorzugsweise zwischen 700 und 900 °C. Falls gewünscht, können die Pigmente nach Aufbringen einzelner Beschichtungen abgetrennt, getrocknet und ggf. geglüht werden, um dann zur Auffällung der weiteren Schichten wieder resuspendiert zu werden.

Die Auffällung der SiO₂-Schicht auf das Substrat erfolgt in der Regel durch Zugabe einer Kalium- oder Natronwasserglas-Lösung bei einem geeigneten pH-Wert.

Weiterhin kann die Beschichtung auch in einem Wirbelbettreaktor durch Gasphasenbeschichtung erfolgen, wobei z. B. die in EP 0 045 851 und EP 0 106 235 zur Herstellung von Perlglanzpigmenten vorgeschlagenen Verfahren entsprechend angewendet werden können.

Der Farbton der Interferenzpigmente kann in sehr weiten Grenzen durch die unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung (Schicht D) wird die chemische und photochemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendermedien können beispielsweise funktionelle Beschichtungen aus Al₂O₃ oder ZrO₂ oder deren Gemische auf die Pigmentoberfläche aufgebracht werden. Weiterhin sind organische Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjee, Philips Technical Review, Vol. 44, No. 3, 81 ff. und P.H. Harding J.C. Berg, J. Adhesion Sci. Technol. Vol. 11 No. 4, S. 471-493.

Gegenüber den Pigmenten aus dem Stand der Technik ohne SiO₂-Schicht auf dem Substrat zeichnen sich die erfindungsgemäßen Pigmente durch ihre höhere Buntheit (Farbstärke C*), ihren höheren Glanz (L-Wert) und ausgeprägte Glitzereffekte, insbesondere bei den Pigmenten auf Basis von Glas- oder Al₂O₃-Plättchen, aus. Gegenüber den goniochromatischen Pigmenten aus der EP 0 753 545 B1 zeigen die erfindungsgemäßen Interferenzpigmente keine oder nur eine geringe Winkelabhängigkeit der Farbe.

Gegenüber der Lehre aus WO 01/30920 ergeben sich nur für SiO₂ als Material für die erste Beschichtung des Trägers entscheidende Vorteile bezüglich Glanz und mechanischer Stabilität der erfindungsgemäßen Pigmente. Über die Offenbarung der WO 01/30920 hinaus sind mit der Erfindung silberweiße Pigmente und hochglänzende Interferenzpigmente mit brillanten Interferenzfarben, wie rot, blau oder grün, zugänglich. Die erfindungsgemäßen Pigmente lassen sich aufgrund ihrer Transparenz vorteilhaft mit Absorptionspigmenten oder Farben abmischen. Durch derartige Kombinationen lassen sich auf besonders einfache Weise ungewöhnliche Farbeindrücke erzielen.

Die erfindungsgemäßen Pigmente sind mit einer Vielzahl von Farbsystemen kompatibel, vorzugsweise aus dem Bereich der Lacke, Farben und Druckfarben und kosmetischen Formulierungen. Für die Herstellung der Druckfarben für, z. B. den Tiefdruck, Flexodruck, Offsetdruck, Offsetüberdrucklackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen sowie für die Anwendungen im Agrarbereich, z. B. für Gewächshausfolien, sowie z. B. für die Farbgebung von Zeltplanen, geeignet.

Da die erfindungsgemäßen Interferenzpigmente einen starken Glanz mit intensiven Interferenzfarben und stark ausgeprägtem Glitzereffekt verbinden, lassen sich mit ihnen besonders wirksame Effekte in den verschiedenen Anwendungsmedien erzielen, z. B. in kosmetischen Formulierungen wie z. B. Nagellacken, Lippenstiften, Presspudern, Gelen, Lotionen, Seifen, Zahnpasten, in Lacken wie z.B. Autolacken, Industrielacken und Pulverlacken sowie in Kunststoffen und in der Keramik.

Aufgrund des guten Skin Feelings und der sehr guten Hautadhäsion sind die erfindungsgemäßen Pigmente sowohl für Personal Care Applications, wie z. B. Body Lotions, Emulsionen, Shampoos, Seifen, etc., als auch insbesondere für die dekorative Kosmetik geeignet.

Es versteht sich von selbst, dass für die verschiedenen Anwendungszwecke die erfindungsgemäßen Mehrschichtpigmente auch vorteilhaft in Abmischung mit organischen Farbstoffen, organischen Pigmenten oder anderen Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Glimmer- und SiO₂-Plättchen etc. verwendet werden können. Die erfindungsgemäßen Pigmente können in jedem Verhältnis mit handelsüblichen Pigmenten und Füllern gemischt werden.

Als Füllstoffe sind z. B. zu nennen natürlicher und synthetischer Glimmer, Nylon Powder, reine oder gefüllte Melaminharze, Talcum, SiO₂, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe.

Bezüglich der Partikelform des Füllstoffes gibt es keine Einschränkungen. Sie kann den Anforderungen gemäß z. B. plättchenförmig, sphärisch oder nadelförmig sein.

Selbstverständlich können die erfindungsgemäßen Pigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z. B. Verdicker und rheologische Zusatzstoffe wie etwa Bentonite, Hektorite, Siliciumdioxide, Ca-Silicate, Gelatinen, hochmolekulare Kohlenhydrate und/oder oberflächenaktive Hilfsmittel, etc.

Die die erfindungsgemäßen Pigmente enthaltenden Formulierungen können dem lipophilen, hydrophilen oder hydrophoben Typ angehören. Bei heterogenen Formulierungen mit diskreten wässrigen und nichtwässrigen Phasen können die erfindungsgemäßen Pigmente in jeweils nur einer der beiden Phasen enthalten oder auch über beide Phasen verteilt sein.

Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen Pigmente in der Formulierung sind keine Grenzen gesetzt. Sie können - je nach Anwendungsfall - zwischen 0,001 (rinse-off-Produkte, z. B. Duschgele) - 100 % (z. B. Glanzeffekt-Artikel für besondere Anwendungen) liegen.

Die erfindungsgemäßen Pigmente können weiterhin auch mit kosmetischen Wirkstoffen kombiniert werden. Geeignete Wirkstoffe sind z. B. Insect Repellents, UV A/BC-Schutzfilter (z. B. OMC, B3, MBC), Anti-Ageing-Wirkstoffe, Vitamine und deren Derivate (z. B. Vitamin A, C, E etc.), Selbstbräuner (z. B. DHA, Erytrolose u.a.) sowie weitere kosmetische Wirkstoffe wie z. B. Bisabolol, LPO, Ectoin, Emblica, Allantoin, Bioflavanoide und deren Derivate.

Die erfindungsgemäßen Pigmente sind weiterhin geeignet zur Herstellung von fließfähigen Pigmentpräparationen und Trockenpräparaten, insbesondere für Druckfarben und kosmetische Anwendungen, enthaltend ein oder mehrere erfindungsgemäße Pigmente, Bindemittel und optional ein oder mehrere Additive.

Gegenstand der Erfindung ist somit auch die Verwendung der Pigmente in Formulierungen wie Farben, Lacken, Automobillacken, Pulverlacken, Druckfarben, Sicherheitsdruckfarben, Kunststoffen, keramischen Materialien, Gläsern, Papier, in Tonern für elektrophotographische Druckverfahren, im Saatgut, in Gewächshausfolien und Zeltplanen, als Absorber bei der Lasermarkierung von Papier und Kunststoffen, in kosmetischen Formulierungen, zur Herstellung von Pigmentanteigungen mit Wasser, organischen und/oder wässrigen Lösemitteln, zur Herstellung von Pigmentpräparationen und Trockenpräparaten, wie z. B. Granulate.

Die nachfolgenden Beispiele sollen die Erfindung näher erläutern ohne sie jedoch zu beschränken.

### Beispiele

### Beispiel 1:

150 g Glasplättchen (Glas A nach Tabelle 1) mit einer mittleren Schichtdicke von 700 nm werden in 1,9 l VE-Wasser unter Rühren auf 75 °C erhitzt. Nun wird mit einer 5 %igen Salzsäure der pH-Wert der Suspension auf 7,5 eingestellt. Anschließend wird eine Natronwasserglaslösung (112 g Natronwasserglaslösung enthaltend 26,8 % SiO₂ gelöst in 112 g VE-Wasser) zugetropft, wobei der pH-Wert durch gleichzeitiges Zudosieren einer 5 %igen Salzsäure konstant bei 7,5 gehalten wird. Nach vollständiger Zugabe wird 0,5 h nachgerührt. Dann wird der pH-Wert der Suspension auf 1,8 eingestellt, 15 min nachgerührt und eine salzsaure Zinntetrachloridlösung (3 g SnCl₄ * 5 H₂O, gelöst in 15 ml 25 %iger Salzsäure und 85 ml voll entsalztem Wasser) zugetropft, wobei der pH-Wert durch gleichzeitiges Zutropfen einer 32 %igen Natronlauge konstant gehalten wird. Nach vollständiger Zugabe wird 15 min nachgerührt.

Es folgt ein Zudosieren einer 30 %igen Titantetrachloridlösung, wobei der pH-Wert durch gleichzeitiges Zutropfen einer 32 %igen Natronlauge konstant gehalten wird. Durch Farbmessung während des Prozesses wird die Koloristik während Herstellung des Pigments kontrolliert und der Fällungsprozess nach dem Buntton (Bunttonwinkel arc tan b*/a*) gesteuert. Nach Erreichen des gewünschten Silber-Endpunktes wird 15 min nachgerührt. Das Pigment enthält 20 % gefälltes SiO₂ bezogen auf die Glasplättchen.

Das Produkt wird abfiltriert, gewaschen, getrocknet bei 150 °C und bei > 700 °C geglüht.

Das fertige Pigment wird in einen handelsüblichen Nitrocellulose-Lack eingearbeitet und es werden Lackkarten angefertigt. Die Lackkarten zeigen ein sehr reines Silberweiß mit hohem Glanz.

**Tabelle 1: Glaszusammensetzungen in %**

| Bestandteile | Glas A | Glas B |
|---|---|---|
| SiO₂ | 64 | 60 |
| Al₂O₃ | 5 | 5 |
| CaO | 6,2 | 7,7 |
| MgO | 2,2 | 5,2 |
| B₂O₃ | 5,3 | 6,1 |
| Na₂O + K₂O | 13,5 | 16 |
| ZnO | 3,7 | 0 |
| FeO/Fe₂O₃ | 0,1 | 0 |

### Beispiel 2:

Nach dem in Beispiel 1 beschriebenen Verfahren wird ein silberweißes Pigment hergestellt. Anstelle von Glasplättchen der Zusammensetzung A nach Tabelle 1 werden Glasplättchen gleicher Dicke und Größenverteilung (20 - 200 µm) mit der Zusammensetzung B verwendet. Die Titandioxidbelegung wird zum gleichen Endpunkt wie in Beispiel 1 gefahren. Die erhaltenen Pigmente sind visuell nicht von denen aus Beispiel 1 zu unterscheiden.

### Beispiele 3 - 5:

Nach der in Beispiel 1 angegebenen Vorschrift werden silberweiße Pigmente mit den folgenden Gewichtsanteilen SiO₂ bezogen auf die Glasplättchen hergestellt:
Beispiel 3: 2% SiO₂ durch Zudosierung von 11,5 g Wasserglaslösung gelöst in 11,5 g Wasser
Beispiel 4: 5% SiO₂ durch Zudosierung von 28 g Wasserglaslösung gelöst in 28 g Wasser
Beispiel 5: 10% SiO₂ durch Zudosierung von 56 g Wasserglaslösung, gelöst in 56 g Wasser

Die Titandioxidbelegungen werden zum gleichen Buntton wie bei den Versuchen 1 und 2 gefahren.

### Beispiele 6 und 7: (Vergleichsbeispiele ohne erste SiO₂-Schicht)

150 g Glasplättchen der Zusammensetzung A nach Tabelle 1 mit einer mittleren Schichtdicke von 700 nm werden in 1,9 l VE-Wasser unter Rühren auf 75 °C erhitzt. Der pH-Wert der Suspension wird mit Salzsäure auf pH 1,8 eingestellt. Anschließend wird eine salzsaure Zinntetrachloridlösung (4,5 g SnCl₄ * 5 H₂O gelöst in 22,5 ml 25 %iger Salzsäure und 128 ml voll entsalztem Wasser) zugetropft, wobei der pH-Wert durch gleichzeitiges Zutropfen einer 32 %igen Natronlauge konstant gehalten wird. Nach vollständiger Zugabe wird 15 min. nachgerührt. Es folgt die Zudosierung einer 30 %igen Titantetrachloridlösung, wobei der pH-Wert durch gleichzeitiges Zutropfen einer 32 %igen Natronlauge konstant gehalten wird. Nach Erreichen des gewünschten Silber-Endpunktes wird 15 min nachgerührt.

Das Produkt wird abfiltriert, gewaschen und bei 150 °C getrocknet. Eine Probe des Pigments wird bei 600 °C (Beispiel 6), eine andere bei 700 °C (Beispiel 7) jeweils 60 Minuten geglüht.

Die fertigen Pigmente werden in einen handelsüblichen Nitrocellulose-Lack eingearbeitet, mit dem Lack werden Lackkarten angefertigt. Mit dem bei 600 °C geglühten Pigment zeigen die Lackkarten ein reines Silberweiß mit gutem Glanz, während im Falle des bei 700 °C geglühten Pigments der Glanz deutlich abgeschwächt ist.

### Beispiel 8: Vergleichsbeispiel

150 g Glasplättchen der Zusammensetzung A nach Tabelle 1 mit einer mittleren Schichtdicke von 700 nm werden in 1,9 l VE-Wasser unter Rühren auf 75 °C erhitzt. Der pH-Wert wird auf 5,5 eingestellt. Unter Rühren werden bei 75 °C 180 ml einer salzsauren Aluminiumchloridlösung (18 g Aluminiumchloridhexahydrat) zugetropft, wobei der pH-Wert mit Natronlauge auf 5 gehalten wird. Nach Beendigung der Zugabe wird noch 2 Stunden bei 75 °C nachgerührt. Die beschichteten Glasplättchen werden abfiltriert, gewaschen, bei 150 °C getrocknet und 30 min bei 400 °C entwässert. Nach dem Abkühlen werden die Aluminiumoxid beschichteten (ca. 5% Al₂O₃) Glasplättchen nach der in Beispiel 6 angegebenen Vorschrift mit Titandioxid zu einem silberweißen Pigment weiterverarbeitet.

Im Vergleich zu dem Pigment nach dem Stand der Technik aus Beispiel 6 zeigt das Pigment aus Beispiel 8 keinerlei Verbesserung des Glanzes, gegenüber den Pigmenten mit SiO₂-Schicht zeigt das Pigment einen wesentlich schwächeren Glanz.

**Tabelle 2:**

| Glanzwerte L und Buntheit C* der silberweißen Pigmente aus den Beispielen 1-8, gemessen auf schwarzem Untergrund | | |
|---|---|---|
| Versuch | Glanzwert L | Buntwert C* |
| 1 | 76 | 3,5 |
| 2 | 76 | 3,6 |
| 3 | 73 | 2,16 |
| 4 | 75 | 2,82 |
| 5 | 76 | 3,4 |
| 6 (Vergleich) | 66 | 1,9 |
| 7 (Vergleich) | 56 | 1,67 |
| 8 (Vergleich) | 62 | 1,8 |

### Beispiel 9: Prüfung der mechanischen Stabilität

Die Verreibstabilität des Pigmentes in kosmetischen Zubereitungen lässt sich in einem Praxistest prüfen. Dabei wird festgestellt, ob die mechanische Stabilität eines Pigmentes für die Verwendung z. B. in Presspuder oder Cremes ausreichend ist. Als Schnelltest hat sich die Verreibung einer Pigmentprobe mit dem Finger auf der Handfläche bewährt. Bei Schichtablösung oder Bruch der Pigmentpartikel durch das Verreiben nimmt der Glanz der Verreibung ab oder geht ganz verloren. Die Abnahme des Glanzes wird visuell beurteilt und in Stufen von 1 bis 5 bewertet, wobei Stufe 1 keine Änderung oder Zunahme des Glanzes durch das Verreiben und die Stufe 5 eine starke Abstumpfung bedeuten. Stufe 3 gilt für die Praxis als bedingt brauchbar, 4 und 5 gelten als unbrauchbar.

Die Pigmente aus den Beispielen 1-7 werden einem solchen Verreibtest unterzogen. Die Ergebnisse sind in Tabelle 3 zusammengestellt und zeigen, dass nur die erfindungsgemäßen Pigmente mit einer SiO₂-Schicht über eine ausreichende mechanische Stabilität für kosmetische Anwendungen verfügen.

**Tabelle 3: Verreibstabilität**

| Pigment | Glassorte | SiO₂-Schicht | Verreibstabilität |
|---|---|---|---|
| Versuch 1 (Erfindung) | A | ca. 70 nm | 1 |
| Versuch 2 (Erfindung) | B | ca. 70 nm | 1 |
| Versuch 3 (Erfindung) | A | ca. 7 nm | 3 |
| Versuch 4 (Erfindung) | A | ca. 17 nm | 2 |
| Versuch 5 (Erfindung) | A | ca. 35 nm | 1 |
| Versuch 6 (Vergleich) | A | 0 | 5 |
| Versuch 7 (Vergleich) | A | 0 | 5 |

### Beispiel 10: (Vergleichsversuch)

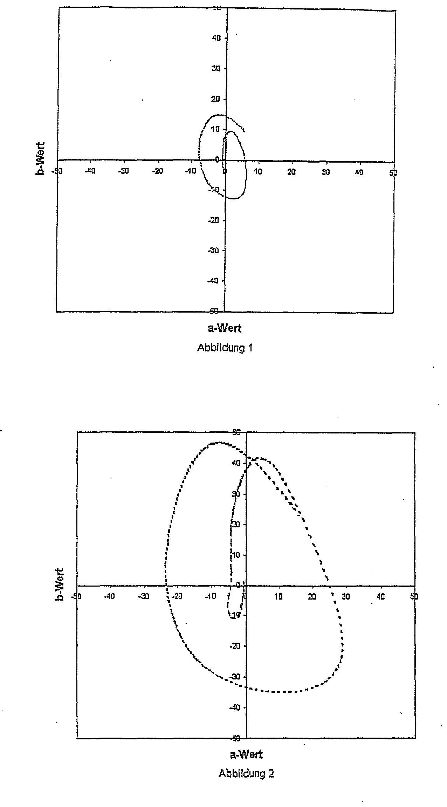

100 g Aluminiumoxidplättchen (hergestellt nach EP 0 763 573 B1, Beispiel 2) werden in einem 5 Liter Laborreaktor in 2 Liter deionisiertem Wasser suspendiert. Unter Rühren werden bei 75 °C 200 ml einer wässrigen SnCl₄-Lösung (36 g SnCl₄ pro Liter Lösung) mit 3 ml/min zugetropft. Der pH-Wert der Suspension wird durch Zudosierung von Natronlauge bei 1,8 gehalten. Es wird noch 10 min nachgerührt, dann wird eine wässrige Titantetrachlorid-Lösung (125 g TiCl₄/Liter Lösung) mit einer Geschwindigkeit von 3 ml/min zudosiert, wobei der pH-Wert durch Zugabe von Natronlauge bei 1,7-1,9 gehalten wird. Auf diese Weise werden die Aluminiumoxidplättchen mit einer Titandioxidschicht belegt, wobei mit wachsender Schichtdicke der Titandioxidschicht zunächst eine silberweiße und dann bunte Interferenzfarben erster bis dritter Ordnung entstehen. Die Koloristik des Interferenzpigmentes wird während des Belegungsprozesses mit Hilfe einer spaltförmigen Messzelle gemessen, die mit dem Reaktor verbunden ist und durch die während der Belegung ständig Reaktionsmischung gepumpt wird. Beim Durchfluss durch den Spalt der Messkammer werden die Pigmentplättchen weitgehend parallel zur Fließrichtung ausgerichtet und dabei gegen einen schwarzen Hintergrund gemessen. Mit einer handelsüblichen Farbmesszelle CR 300 der Firma Minolta wird das nach einer Blitzbelichtung in einem Winkel reflektierte Licht gemessen. Die Messdaten werden gemäß DIN 5033 Teil 3 in CILAB-Werte umgerechnet und dargestellt. Auf diese Weise lässt sich die Koloristik des Pigmentes in jedem Stadium der Belegung bestimmen. In Abbildung 1 ist der Verlauf der Koloristik der Belegung in Form des a*/b*-Diagramms dargestellt. In dem System repräsentieren +a-Werte rot, -a-Werte grün, +b-Werte gelb und -b-Werte blau. Die Messkurve beginnt im Koordinatennullpunkt und gibt die der Titandioxidbelegung entsprechende Interferenzfarbe wieder. Die Buntheit der Pigmente ist um so größer, je weiter der Farbort vom Koordinatennullpunkt entfernt ist.

### Beispiel 11:

In dem Laborreaktor aus Beispiel 10 werden 100 g Aluminiumoxidplättchen (hergestellt nach EP 0 763 573 B1, Beispiel 2) in 1,6 Liter deionisiertem Wasser suspendiert. Der pH-Wert der Suspension wird auf 8 gestellt, anschließend wird eine Natronwasserglaslösung (190 g Natronwasserglaslösung enthaltend 26,8 % SiO₂ gelöst in 190 g VE-Wasser) zugetropft, wobei der pH-Wert durch gleichzeitiges Zudosieren einer 5 %igen Salzsäure konstant bei 8 gehalten wird. Nach vollständiger Zugabe wird 0,5 h nachgerührt. Dann wird der pH-Wert der Suspension mit 5 %iger Salzsäure auf 1,8 eingestellt, 15 min nachgerührt und eine salzsaure Zinntetrachloridlösung (4,5 g SnCl₄ * 5 H₂O gelöst in 22,5 ml 25 %iger Salzsäure und 128 ml voll entsalztem Wasser) zugetropft, wobei der pH-Wert durch gleichzeitiges Zutropfen einer 32 %igen Natronlauge konstant gehalten wird. Nach vollständiger Zugabe wird 15 min nachgerührt, dann wird eine wässrige Titantetrachlorid-Lösung (125 g TiCl₄/Liter Lösung) mit einer Geschwindigkeit von 3 ml/min zudosiert, wobei der pH-Wert durch Zugabe von Natronlauge bei 1,7-1,9 gehalten wird. Die Koloristik des Pigmentes wird während der TiO₂-Belegung wie in Beispiel 10 gemessen. Der Vergleich zeigt, dass die erfindungsgemäßen Pigmente gegenüber Pigmenten aus dem Stand der Technik eine wesentlich bessere Buntheit ("Farbstärke") aufweisen (Abbildung 2). Zusätzlich zeigen die erfindungsgemäßen Pigmente einen wesentlich höheren Glanz.

### Beispiel 12:

150 g Glasplättchen (Glas C nach Tabelle 4) mit einer mittleren Schichtdicke von 900 nm werden in 1,9 l VE-Wasser unter Rühren auf 75 °C erhitzt. Nun wird mit einer 5 %igen Salzsäure der pH-Wert der Suspension auf 7,5 eingestellt. Anschließend wird eine Natronwasserglaslösung (112 g Natronwasserglaslösung enthaltend 26,8 % SiO₂ gelöst in 112 g VE-Wasser) zugetropft, wobei der pH-Wert durch gleichzeitiges Zudosieren einer 5 %igen Salzsäure konstant bei 7,5 gehalten wird. Nach vollständiger Zugabe wird 0,5 h nachgerührt. Dann wird der pH-Wert der Suspension auf 1,8 eingestellt, 15 min nachgerührt und eine salzsaure Zinntetrachloridlösung (3 g SnCl₄ * 5 H₂O gelöst in 15 ml 25 %iger Salzsäure und 85 ml voll entsalztem Wasser) zugetropft, wobei der pH-Wert durch gleichzeitiges Zutropfen einer 32 %igen Natronlauge konstant gehalten wird. Nach vollständiger Zugabe wird 15 min nachgerührt.

Es folgt ein Zudosieren einer 30 %igen Titantetrachloridlösung, wobei der pH-Wert durch gleichzeitiges Zutropfen einer 32 %igen Natronlauge konstant gehalten wird. Durch Farbmessung während des Prozesses wird die Koloristik während Herstellung des Pigments kontrolliert und der Fällungsprozess nach dem Buntton (Bunttonwinkel arc tan b*/a*) gesteuert. Nach Erreichen des gewünschten Silber-Endpunktes wird 15 min nachgerührt. Das Pigment enthält 20 % gefälltes SiO₂ bezogen auf die Glasplättchen.

Das Produkt wird abfiltriert, gewaschen, getrocknet bei 150 °C und bei > 700 °C geglüht.

Das fertige Pigment wird in einen handelsüblichen Nitrocellulose-Lack eingearbeitet und es werden Lackkarten angefertigt. Die Lackkarten zeigen ein sehr reines Silberweiß mit hohem Glanz.

**Tabelle 4: Glaszusammensetzungen in %**

| Bestandteile | Glas C | Glas D |
|---|---|---|
| SiO₂ | 65,7 | 64,8 |
| Al₂O₃ | 4,0 | 4,9 |
| CaO | 5,9 | 5,6 |
| MgO | 1,9 | 1,7 |
| B₂O₃ | 5,4 | 4,2 |
| Na₂O + K₂O | 12,7 | 14,7 |
| ZnO | 4,3 | 3,9 |
| FeO/Fe₂O₃ | 0,1 | 0,2 |

### Beispiel 13:

Nach dem in Beispiel 12 beschriebenen Verfahren wird ein silberweißes Pigment hergestellt. An Stelle von Glasplättchen der Zusammensetzung C nach Tabelle 4 werden Glasplättchen gleicher Dicke und Größenverteilung (20 - 200 µm) mit der Zusammensetzung D verwendet. Die Titandioxidbelegung wird zum gleichen Endpunkt wie in Beispiel 12 gefahren. Die erhaltenen Pigmente sind visuell nicht von denen aus Beispiel 12 zu unterscheiden.

### Beispiele 14 - 16:

Nach der in Beispiel 12 angegebenen Vorschrift werden silberweiße Pigmente mit den folgenden Gewichtsanteilen SiO₂ bezogen auf die Glasplättchen hergestellt:
Beispiel 14: 2% SiO₂ durch Zudosierung von 11,5 g Wasserglaslösung gelöst in 11,5 g Wasser
Beispiel 15: 5% SiO₂ durch Zudosierung von 28 g Wasserglaslösung gelöst in 28 g Wasser
Beispiel 16: 10% SiO₂ durch Zudosierung von 56 g Wasserglaslösung, gelöst in 56 g Wasser

Die Titandioxidbelegungen werden zum gleichen Buntton wie bei den Beispielen 12 und 13 gefahren.

### Beispiele 17 und 18: (Vergleichsbeispiele ohne erste SiO₂-Schicht)

150 g Glasplättchen der Zusammensetzung C nach Tabelle 4 mit einer mittleren Schichtdicke von 900 nm werden in 1,9 l VE-Wasser unter Rühren auf 75 °C erhitzt. Der pH-Wert der Suspension wird mit Salzsäure auf pH 1,8 eingestellt. Anschließend wird eine salzsaure Zinntetrachloridlösung (4,5 g SnCl₄ * 5 H₂O gelöst in 22,5 ml 25 %iger Salzsäure und 128 ml voll entsalztem Wasser) zugetropft, wobei der pH-Wert durch gleichzeitiges Zutropfen einer 32 %igen Natronlauge konstant gehalten wird. Nach vollständiger Zugabe wird 15 min. nachgerührt. Es folgt die Zudosierung einer 30 %igen Titantetrachloridlösung, wobei der pH-Wert durch gleichzeitiges Zutropfen einer 32 %igen Natronlauge konstant gehalten wird. Nach Erreichen des gewünschten Silber-Endpunktes wird 15 min nachgerührt.

Das Produkt wird abfiltriert, gewaschen und bei 150 °C getrocknet. Eine Probe des Pigments wird bei 600 °C (Beispiel 17), eine andere bei 700 °C (Beispiel 18) jeweils 60 Minuten geglüht
Die fertigen Pigmente werden in einen handelsüblichen Nitrocellulose-Lack eingearbeitet, mit dem Lack werden Lackkarten angefertigt. Mit dem bei 600 °C geglühten Pigment zeigen die Lackkarten ein reines Silberweiß mit gutem Glanz, während im Falle des bei 700 °C geglühten Pigments der Glanz deutlich abgeschwächt ist.

### Beispiel 19: Vergleichsbeispiel

150 g Glasplättchen der Zusammensetzung C nach Tabelle 4 mit einer mittleren Schichtdicke von 900 nm werden in 1,9 l VE-Wasser unter Rühren auf 75 °C erhitzt. Der pH-Wert wird auf 5,5 eingestellt. Unter Rühren werden bei 75 °C 180 ml einer salzsauren Aluminiumchloridlösung (18 g Aluminiumchloridhexahydrat) zugetropft, wobei der pH-Wert mit Natronlauge auf 5 gehalten wird. Nach Beendigung der Zugabe wird noch 2 Stunden bei 75 °C nachgerührt. Die beschichteten Glasplättchen werden abfiltriert, gewaschen, bei 150 °C getrocknet und 30 min bei 400 °C entwässert. Nach dem Abkühlen werden die Aluminiumoxid beschichteten (ca. 5 % Al₂O₃) Glasplättchen nach der in Beispiel 17 angegebenen Vorschrift mit Titandioxid zu einem silberweißen Pigment weiterverarbeitet.

Im Vergleich zu dem Pigment nach dem Stand der Technik aus Beispiel 17 zeigt das Pigment aus Beispiel 19 keinerlei Verbesserung des Glanzes, gegenüber den Pigmenten mit SiO₂-Schicht zeigt das Pigment einen wesentlich schwächeren Glanz.

### Beispiel 20: Prüfung der mechanischen Stabilität

Analog Beispiel 9 erfolgt die Prüfung der mechanischen Stabilität.

Die Pigmente aus den Beispielen 12-18 werden einem solchen Verreibtest unterzogen. Die Ergebnisse sind in Tabelle 5 zusammengestellt und zeigen, dass nur die erfindungsgemäßen Pigmente mit einer SiO₂-Schicht über eine ausreichende mechanische Stabilität für kosmetische Anwendungen verfügen.

**Tabelle 5: Verreibstabilität**

| Pigment | Glassorte | SiO₂-Schicht | Verreibstabilität |
|---|---|---|---|
| Versuch 12 (Erfindung) | C | ca. 90 nm | 1 |
| Versuch 13 (Erfindung) | D | ca. 90 nm | 1 |
| Versuch 14 (Erfindung) | C | ca. 9 nm | 3 |
| Versuch 15 (Erfindung) | C | ca. 22,5 nm | 2 |
| Versuch 16 (Erfindung) | C | ca. 45 nm | 1 |
| Versuch 17 (Vergleich) | C | 0 | 5 |
| Versuch 18 (Vergleich) | C | 0 | 5 |

### Beispiel 21:

125 g Glasplättchen (Glas D nach Tabelle 4) mit einer mittleren Schichtdicke von 500 nm werden in 1,75 l VE-Wasser unter Rühren auf 75 °C erhitzt. Nun wird mit einer 5 %igen Salzsäure der pH-Wert der Suspension auf 8 eingestellt. Anschließend wird eine Natronwasserglaslösung (67 g Natronwasserglaslösung enthaltend 26,8 % SiO₂ gelöst in 67 g VE-Wasser) zugetropft, wobei der pH-Wert durch gleichzeitiges Zudosieren einer 5 %igen Salzsäure konstant bei 7,5 gehalten wird. Nach vollständiger Zugabe wird 15 min nachgerührt. Dann wird der pH-Wert der Suspension auf 2,8 eingestellt, 15 min nachgerührt und etwa 320 ml einer salzsauren, 15 %igen Eisenchloridlösung zugetropft, wobei der pH-Wert durch gleichzeitiges Zutropfen einer 32 %igen Natronlauge konstant gehalten wird. Die Koloristik des Pigmentes wird während der Belegung wie in Beispiel 10 gemessen. Nach vollständiger Zugabe wird 15 min nachgerührt. Das Pigment enthält 10 % gefälltes SiO₂ bezogen auf die Glasplättchen.

Das Produkt wird abfiltriert, gewaschen, getrocknet bei 150 °C und bei > 700 °C geglüht.

Das fertige Pigment wird in einen handelsüblichen Nitrocellulose-Lack eingearbeitet und es werden Lackkarten angefertigt. Die Lackkarten zeigen ein sehr reines Eisenoxid-Rot mit hohem Glanz.

### Beispiel 22:

125 g Glasplättchen (Glas D nach Tabelle 4, Partikelgrößen 10 - 60 µm) mit einer mittleren Schichtdicke von 500 nm werden in 1,75 l VE-Wasser unter Rühren auf 75 °C erhitzt. Nun wird mit einer 5 %igen Salzsäure der pH-Wert der Suspension auf 7,5 eingestellt. Anschließend wird eine Natronwasserglaslösung (67 g Natronwasserglaslösung enthaltend 26,8 % SiO₂ gelöst in 67 g VE-Wasser) zugetropft, wobei der pH-Wert durch gleichzeitiges Zudosieren einer 5 %igen Salzsäure konstant bei 7,5 gehalten wird. Nach vollständiger Zugabe wird 15 min nachgerührt.

Dann wird der pH-Wert der Suspension auf 1,8 eingestellt, 15 min nachgerührt und eine salzsaure Zinntetrachlorid-lösung (2,5 g SnCl₄ * 5 H₂O gelöst in 12,5 ml 25 %iger Salzsäure und 70 ml voll entsalztem Wasser) zugetropft, wobei der pH-Wert durch gleichzeitiges Zutropfen einer 32 %igen Natronlauge konstant gehalten wird. Nach vollständiger Zugabe wird 15 min nachgerührt.

Anschließend wird der pH-Wert der Suspension auf 1,8 gehalten und eine wässrige Titantetrachlorid-Lösung (400 g TiCl₄/Liter Lösung) mit einer Geschwindigkeit von 2 ml/min zudosiert, wobei der pH-Wert durch Zugabe von Natronlauge bei 1,7-1,9 gehalten wird. Die Koloristik des Pigmentes wird während der TiO₂-Belegung wie in Beispiel 10 gemessen. Ist der erforderliche Bunttonwinkel erreicht, wird der pH-Wert durch Zugabe einer 32 %igen NaOH langsam auf pH 8 eingestellt und wiederum eine Natronwasserglaslösung (9,8 g Natronwasserglaslösung enthaltend 26,8 % SiO₂ gelöst in 9,8 g VE-Wasser) zugetropft, wobei der pH-Wert durch gleichzeitiges Zudosieren einer 5 %igen Salzsäure konstant bei 7,5 gehalten wird. Nach vollständiger Zugabe wird 15 min nachgerührt. Das Volumen der Natronwasserglaslösung muß genau berechnet werden, da während der Belegung koloristisch keine Farbentwicklung verfolgt werden kann.

Dann wird der pH-Wert wiederum mit 5 %iger Salzsäure auf pH 1,8 eingestellt und eine wässrige Titantetrachlorid-Lösung (400 g TiCl₄/Liter Lösung) mit einer Geschwindigkeit von 2 ml/min zudosiert, wobei der pH-Wert durch Zugabe von Natronlauge bei 1,7-1,9 gehalten wird. Der Endpunkt der Titration wird anhand des Bunttonwinkels bestimmt.

Das Pigment enthält 10 % gefälltes SiO₂ bezogen auf die Glasplättchen.

Das Produkt wird abfiltriert, gewaschen, getrocknet bei 150 °C und bei > 700 °C geglüht.

Das fertige Pigment wird in einen handelsüblichen Nitrocellulose-Lack eingearbeitet und es werden Lackkarten angefertigt. Die Lackkarten zeigen eine sehr reine und brillante Interferenzfarbe mit hohem Glanz.

## Patentansprüche

1. Interferenzpigmente auf der Basis von beschichteten plättchenförmigen Substraten, **dadurch gekennzeichnet, dass** sie auf der Oberfläche
(A) eine erste Schicht aus SiO₂ mit einer Schichtdicke von 5-350 nm,
(B) eine hochbrechende Beschichtung mit einem Brechungsindex n > 1,8 aus TiO₂, ZrO₂, SnO₂, ZnO, Ce₂O₃, Fe₂O₃, Fe₃O₄, Cr₂O₃, CoO, Co₃O₄, VO₂, V₂O₃, NiO, Titansuboxiden (TiO₂ teilweise reduziert mit Oxidationszahlen von < 4 bis 2), Titanoxynitriden, FeO(OH), dünnen semitransparenten Metallschichten aus Al, Fe, Cr, Ag, Au, Pt, Pd,
und/oder
(C) ein Interferenzsystem aus der Schichtenfolge TiO₂-SiO₂-TiO₂
und optional
(D) eine äußere Schutzschicht
enthalten,und dass die plättchenförmigen Substrate Glasplättchen, Glimmerplättchen oder Aluminiumoxidplättchen sind.

2. Interferenzpigmente nach Anspruch 1, **dadurch gekennzeichnet, dass** die Dicke der Schicht (A) 30-100 nm beträgt.

3. Interferenzpigmente nach Anspruch 1 oder 2, **dadurch gekennzeichnet, dass** die Schicht (A) mit Rußpartikeln, Metallpartikeln und/oder Farbpigmenten dotiert ist.

4. Interferenzpigmente nach einem oder mehreren der Ansprüche 1 bis 3, **dadurch gekennzeichnet, dass** die Schicht (B) aus Metalloxiden besteht.

5. Interferenzpigmente nach einem oder mehreren der Ansprüche 1 bis 4, **dadurch gekennzeichnet, dass** es sich bei den Metalloxiden um TiO₂, ZrO₂, SnO₂, ZnO, Ce₂O₃, Fe₂O₃, Fe₃O₄, Cr₂O₃, CoO, Co₃O₄, VO₂, V₂O₃, NiO, Titansuboxide handelt.

6. Interferenzpigmente nach einem oder mehreren der Ansprüche 1 bis 5, **dadurch gekennzeichnet, dass** die Schicht (B) Titandioxid ist.

7. Interferenzpigmente nach einem oder mehreren der Ansprüche 1 bis 6, **dadurch gekennzeichnet, dass** das Titandioxid in der Anatas- oder in der Rutilmodifikation vorliegt.

8. Interferenzpigmente nach einem oder mehreren der Ansprüche 1 bis 7, **dadurch gekennzeichnet, dass** sie folgenden Aufbau besitzen:
Glasplättchen + SiO₂ + TiO₂
Glasplättchen + SiO₂ + Fe₂O₃
Glasplättchen + SiO₂ + Fe₃O₄
Glasplättchen + SiO₂ + Cr₂O₃
Glasplättchen + SiO₂ + TiO₂ + Berliner Blau
Glasplättchen + SiO₂ + TiO₂ + Karminrot
Glasplättchen + SiO₂ + TiO₂ + SiO₂ + TiO₂
Glasplättchen + SiO₂ + TiO₂ + Cr
Glimmerplättchen + SiO₂ + TiO₂
Glimmerplättchen + SiO₂ + Fe₂O₃
Glimmerplättchen + SiO₂ + Fe₃O₄
Glimmerplättchen + SiO₂ + Cr₂O₃
Glimmerplättchen + SiO₂ + TiO₂ + Berliner Blau
Glimmerplättchen + SiO₂ + TiO₂ + Karminrot
Glimmerplättchen + SiO₂ + TiO₂ + SiO₂ + TiO₂
Glimmerplättchen + SiO₂ + TiO₂ + Cr
Al₂O₃-Plättchen + SiO₂ + TiO₂
Al₂O₃-Plättchen + SiO₂ + Fe₂O₃
Al₂O₃-Plättchen + SiO₂ + Fe₃O₄
Al₂O₃-Plättchen + SiO₂ + Cr₂O₃
Al₂O₃-Plättchen + SiO₂ + TiO₂ + Berliner Blau
Al₂O₃-Plättchen + SiO₂ + TiO₂ + Karminrot
Al₂O₃-Plättchen + SiO₂ + SnO₂ + TiO₂ + Karminrot
Al₂O₃-Plättchen + SiO₂ + TiO₂ + SiO₂ + TiO₂
Al₂O₃-Plättchen + SiO₂ + TiO₂ + Cr

9. Interferenzpigmente nach einem oder mehreren der Ansprüche 1 bis 8, **dadurch gekennzeichnet, dass** die Dicke der Schicht (C) 40-800 nm beträgt.

10. Interferenzpigmente nach einem oder mehreren der Ansprüche 1 bis 9, **dadurch gekennzeichnet, dass** sie zu Erhöhung der Licht-, Temperatur- und Wetterstabilität eine äußere Schutzschicht (D) aufweisen.

11. Verfahren zur Herstellung der Interferenzpigmente nach einem oder mehreren der Ansprüche 1 bis 10, **dadurch gekennzeichnet, dass** die Beschichtung der Substrate nasschemisch durch hydrolytische Zersetzung von Metallsalzen in wässrigem Medium oder im Wirbelbettreaktor durch Gasphasenbeschichtung erfolgt.

12. Verwendung der Interferenzpigmente nach einem oder mehreren der Ansprüche 1 bis 10 in Farben, Lacken, Automobillacken, Pulverlacken, Druckfarben, Sicherheitsdruckfarben, Kunststoffen, keramischen Materialien, Gläsern, Papier, in Tonern für elektrophotographische Druckverfahren, im Saatgut, in Gewächshausfolien und Zeltplanen, als Absorber bei der Lasermarkierung von Papier und Kunststoffen, in kosmetischen Formulierungen, zur Herstellung von Pigmentanteigungen mit Wasser, organischen und/oder wässrigen Lösemitteln, zur Herstellung von Pigmentpräparationen und Trockenpräparaten.

## Claims

1. Interference pigments based on coated flake-form substrates, **characterised in that** they comprise on the surface
(A) a first layer of SiO₂ having a layer thickness of 5-350 nm,
(B) a highly refractive coating having a refractive index n > 1.8 comprising TiO₂, ZrO₂, SnO₂, ZnO, Ce₂O₃, Fe₂O₃, Fe₃O₄, Cr₂O₃, CoO, Co₃O₄, VO₂, V₂O₃, NiO, titanium suboxides (TiO₂ partially reduced with oxidation states from < 4 to 2), titanium oxynitrides, FeO(OH), thin semi-transparent metal layers comprising Al, Fe, Cr, Ag, Au, Pt or Pd,
and/or
(C) an interference system comprising the layer sequence TiO₂-SiO₂-TiO₂
and optionally
(D) an outer protective layer,
and **in that** the flake-form substrates are glass flakes, mica flakes or aluminium oxide flakes.

2. Interference pigments according to Claim 1, **characterised in that** the thickness of layer (A) is 30-100 nm.

3. Interference pigments according to Claim 1 or 2, **characterised in that** layer (A) is doped with carbon black particles, metal particles and/or coloured pigments.

4. Interference pigments according to one or more of Claims 1 to 3, **characterised in that** layer (B) consists of metal oxides.

5. Interference pigments according to one or more of Claims 1 to 4, **characterised in that** the metal oxides are TiO₂, ZrO₂, SnO₂, ZnO, Ce₂O₃, Fe₂O₃, Fe₃O₄, Cr₂O₃, CoO, Co₃O₄, VO₂, V₂O₃, NiO or titanium suboxides.

6. Interference pigments according to one or more of Claims 1 to 5, **characterised in that** layer (B) is titanium dioxide.

7. Interference pigments according to one or more of Claims 1 to 6, **characterised in that** the titanium dioxide is in the anatase or rutile modification.

8. Interference pigments according to one or more of Claims 1 to 7, **characterised in that** they have the following structure:
glass flake + SiO₂ + TiO₂
glass flake + SiO₂ + Fe₂O₃
glass flake + SiO₂ + Fe₃O₄
glass flake + SiO₂ + Cr₂O₃
glass flake + SiO₂ + TiO₂ + Berlin Blue
glass flake + SiO₂ + TiO₂ + Carmine Red
glass flake + SiO₂ + TiO₂ + SiO₂ + TiO₂
glass flake + SiO₂ + TiO₂ + Cr
mica flake + SiO₂ + TiO₂
mica flake + SiO₂ + Fe₂O₃
mica flake + SiO₂ + Fe₃O₄
mica flake + SiO₂ + Cr₂O₃
mica flake + SiO₂ + TiO₂ + Berlin Blue
mica flake + SiO₂ + TiO₂ + Carmine Red
mica flake + SiO₂ + TiO₂ + SiO₂ + TiO₂
mica flake + SiO₂ + TiO₂ + Cr
Al₂O₃ flake + SiO₂ + TiO₂
Al₂O₃ flake + SiO₂ + Fe₂O₃
Al₂O₃ flake + SiO₂ + Fe₃O₄
Al₂O₃ flake + SiO₂ + Cr₂O₃
Al₂O₃ flake + SiO₂ + TiO₂ + Berlin Blue
Al₂O₃ flake + SiO₂ + TiO₂ + Carmine Red
Al₂O₃ flake + SiO₂ + SnO₂ + TiO₂ + Carmine Red
Al₂O₃ flake + SiO₂ + TiO₂ + SiO₂ + TiO₂
Al₂O₃ flake + SiO₂ + TiO₂ + Cr.

9. Interference pigments according to one or more of Claims 1 to 8, **characterised in that** the thickness of layer (C) is 40-800 nm.

10. Interference pigments according to one or more of Claims 1 to 9, **characterised in that** they have an outer protective layer (D) for increasing the light, temperature and weather stability.

11. Process for the preparation of the interference pigments according to one or more of Claims 1 to 10, **characterised in that** the coating of the substrates is carried out by wet-chemical methods by hydrolytic decomposition of metal salts in aqueous medium or by gas-phase coating in a fluidised-bed reactor.

12. Use of the interference pigments according to one or more of Claims 1 to 10 in paints, coatings, automotive paints, powder coatings, printing inks, security printing inks, plastics, ceramic materials, glasses, paper, in toners for electrophotographic printing processes, in seed, in greenhouse sheeting and tarpaulins, as absorbers in the laser marking of paper and plastics, in cosmetic formulations, for the preparation of pigment pastes with water, organic and/or aqueous solvents, and for the preparation of pigment preparations and dry preparations.

## Revendications

1. Pigments d'interférence basés sur des substrats sous forme de flocons revêtus, **caractérisés en ce qu'**ils comprennent sur la surface :
(A) une première couche de SiO₂ qui présente une épaisseur de couche de 5 nm à 350 nm ;
(B) un revêtement hautement réfractif qui présente un indice de réfraction n > 1,8 comprenant du TiO₂, du ZrO₂, du SnO₂, du ZnO, du Ce₂O₃, du Fe₂O₃, du Fe₃O₄, du Cr₂O₃, du CoO, du Co₃O₄, du VO₂, du V₂O₃, du NiO, des sous-oxydes de titane (du TiO₂ partiellement réduit qui présente des états d'oxydation qui vont de < 4 à 2), des oxynitrures de titane, du FeO(OH), des couches métalliques semi-transparentes minces qui comprennent de l'Al, du Fe, du Cr, de l'Ag, de l'Au, du Pt ou du Pd ;
et/ou :
(C) un système d'interférence qui comprend la séquence de couches TiO₂-SiO₂-TiO₂ ;
et en option :
(D) une couche de protection externe ;
et **en ce que** les substrats sous forme de flocons sont des flocons de verre, des flocons de mica ou des flocons d'oxyde d'aluminium.

2. Pigments d'interférence selon la revendication 1, **caractérisés en ce que** l'épaisseur de la couche (A) est de 30 nm à 100 nm.

3. Pigments d'interférence selon la revendication 1 ou 2, **caractérisés en ce que** la couche (A) est dopée à l'aide de particules de noir de carbone, de particules métalliques et/ou de pigments colorés.

4. Pigments d'interférence selon une ou plusieurs des revendications 1 à 3, **caractérisés en ce que** la couche (B) est constituée par des oxydes métalliques.

5. Pigments d'interférence selon une ou plusieurs des revendications 1 à 4, **caractérisés en ce que** les oxydes métalliques sont le TiO₂, le ZrO₂, le SnO₂, le ZnO, le Ce₂O₃, le Fe₂O₃, le Fe₃O₄, le Cr₂O₃, le CoO, le Co₃O₄, le VO₂, le V₂O₃, le NiO ou les sous-oxydes de titane.

6. Pigments d'interférence selon une ou plusieurs des revendications 1 à 5, **caractérisés en ce que** la couche (B) est en dioxyde de titane.

7. Pigments d'interférence selon une ou plusieurs des revendications 1 à 6, **caractérisés en ce que** le dioxyde de titane est selon la modification anatase ou rutile.

8. Pigments d'interférence selon une ou plusieurs des revendications 1 à 7, **caractérisés en ce qu'**ils présentent la structure qui suit :
flocon de verre + SiO₂ + TiO₂
flocon de verre + SiO₂ + Fe₂O₃
flocon de verre + SiO₂ + Fe₃O₄
flocon de verre + SiO₂ + Cr₂O₃
flocon de verre + SiO₂ + TiO₂ + bleu de Berlin
flocon de verre + SiO₂ + TiO₂ + rouge carmin
flocon de verre + SiO₂ + TiO₂ + SiO₂ + TiO₂
flocon de verre + SiO₂ + TiO₂ + Cr
flocon de mica + SiO₂ + TiO₂
flocon de mica + SiO₂ + Fe₂O₃
flocon de mica + SiO₂ + Fe₃O₄
flocon de mica + SiO₂ + Cr₂O₃
flocon de mica + SiO₂ + TiO₂ + bleu de Berlin
flocon de mica + SiO₂ + TiO₂ + rouge carmin
flocon de mica + SiO₂ + TiO₂ + SiO₂ + TiO₂
flocon de mica + SiO₂ + TiO₂ + Cr
flocon d'Al₂O₃ + SiO₂ + TiO₂
flocon d'Al₂O₃ + SiO₂ + Fe₂O₃
flocon d'Al₂O₃ + SiO₂ + Fe₃O₄
flocon d'Al₂O₃ + SiO₂ + Cr₂O₃
flocon d'Al₂O₃ + SiO₂ + TiO₂ + bleu de Berlin
flocon d'Al₂O₃ + SiO₂ + TiO₂ + rouge carmin
flocon d'Al₂O₃ + SiO₂ + SnO₂ + TiO₂ + rouge carmin
flocon d'Al₂O₃ + SiO₂ + TiO₂ + SiO₂ + TiO₂
flocon d'Al₂O₃ + SiO₂ + TiO₂ + Cr.

9. Pigments d'interférence selon une ou plusieurs des revendications 1 à 8, **caractérisés en ce que** l'épaisseur de la couche (C) est de 40 nm à 800 nm.

10. Pigments d'interférence selon une ou plusieurs des revendications 1 à 9, **caractérisés en ce qu'**ils comportent une couche de protection externe (D) pour augmenter la stabilité à la lumière, à la température et aux conditions météorologiques.

11. Procédé pour la préparation de pigments d'interférence selon une ou plusieurs des revendications 1 à 10, **caractérisé en ce que** le revêtement des substrats est mis en oeuvre au moyen de procédés chimiques par voie humide, par décomposition hydrolitique de sels métalliques dans un milieu aqueux ou par revêtement en phase gazeuse dans un réacteur à lit fluidisé.

12. Utilisation des pigments d'interférence selon une ou plusieurs des revendications 1 à 10 dans les peintures, les revêtements, les peintures d'automobiles, les revêtements pulvérulents, les encres d'impression, les encres d'impression de sécurité, les matières plastiques, les matériaux de céramique, les verres, le papier, dans les toners pour des processus d'impression électro-photographique, dans les graines ou semences, dans les feuilles et les bâches pour les serres, en tant qu'absorbeurs pour le marquage au laser du papier et des matières plastiques, dans les formulations cosmétiques, pour la préparation de pâtes pigmentaires avec de l'eau, de solvants organiques et/ou aqueux, ainsi que pour la préparation de préparations pigmentaires et de préparations sèches.
